# FASCICULE DE BREVET EUROPEEN

(11) **EP 3 273 398 B1**
(45) Date de publication et mention de la délivrance du brevet: **15.12.2021**
(21) Numéro de dépôt: 17182194.5
(22) Date de dépôt: 19.07.2017
(51) Int. Cl.: H04B 5/00, H04W 12/06, H04W 12/08, H04W 4/80, G06Q 20/32, G06Q 20/34, H04K 1/00

(54) **PROCÉDÉ DE TRAITEMENT DE DONNÉES PAR UN DISPOSITIF ÉLECTRONIQUE D'ACQUISITION DE DONNÉES, DISPOSITIF ET PROGRAMME CORRESPONDANT**
DATENVERARBEITUNGSVERFAHREN MITHILFE EINER ELEKTRONISCHEN VORRICHTUNG ZUR DATENERFASSUNG, VORRICHTUNG UND ENTSPRECHENDES PROGRAMM
METHOD FOR PROCESSING DATA BY AN ELECTRONIC DATA-ACQUISITION DEVICE, DEVICE AND CORRESPONDING PROGRAM

(30) Priorité: 21.07.2016 FR 1656960
(43) Date de publication de la demande: 24.01.2018
(73) Titulaire: INGENICO GROUP, 75015 Paris (FR)
(72) Inventeur: BEUNARDEAU, Marc, 75015 Paris (FR)
(74) Mandataire: Vidon Brevets & Stratégie

(56) Documents cités:
- EP-A1- 2 574 098
- EP-A2- 2 833 659
- WO-A1-2004/012352
- FR-A1- 2 652 698
- US-A- 2 292 387
- US-A- 5 181 246
- US-A1- 2015 007 310
- Anonymous: "Near field communication - Wikipedia, the free encyclopedia", , 7 février 2015 (2015-02-07), XP055275510, Extrait de l'Internet: URL:https://en.wikipedia.org/w/index.php?t itle=Near_field_communication&oldid=646058 855 [extrait le 2016-05-25]

## Description

### 1. Domaine

La présente technique se rapporte au domaine de la sécurisation des données échangées par l'intermédiaire d'un protocole de transmission de données sans contact. La technique se rapporte plus particulièrement à la transmission de données de type NFC, dans laquelle on effectue une transmission entre un premier dispositif et un deuxième dispositif séparés d'une distance de l'ordre d'une dizaine de centimètre au plus. La technique ne s'applique pas et n'est pas destinée à s'appliquer dans le cadre de techniques de transmission de données de type WiFi, WiMax, LTE, dont les technologies de transmission sont différentes.

### 2. Art Antérieur

De nombreux dispositifs de la vie quotidienne sont aptes à communiquer et à échanger des données entre eux. Une part croissante de dispositifs utilisent, pour ce faire, des protocoles d'échange de données dit "en champ proches" ou encore NFC. Parfois, ces techniques de transmission de données sont également appelées RFID. Cette appellation n'est pas correcte puisque NFC signifie communication en champ proche, tandis que RFID se rapporte à des moyens d'identification par fréquence radio. Les deux utilisent des signaux radio pour toutes sortes de fins de repérage et de suivi, en remplaçant parfois des codes à barres. Toutes deux utilisent des moyens de transmission de données à courte portée.

Or, l'utilisation de ce type de technologie suscite encore des craintes et des interrogations de la part des utilisateurs. Nombreux sont ceux qui n'accordent pas ou peu confiance à ces technologies, plus particulièrement lorsqu'il s'agit de les utiliser à des fins de traitement de données personnelles et/ou confidentielles. C'est par exemple le cas du paiement. Relativement récemment, des dispositifs de paiement sans contact ont fait leur apparition. Il s'agit par exemple des cartes de paiement sans contact qui permettent d'effectuer un paiement (dont le montant est généralement plafonné) en apposant (ou en rapprochant) la carte d'un terminal de paiement compatible. Il s'agit également des terminaux de communication, qui intègrent également des "puces" sans contact : ces puces (également appelées "contactless chip") offrent des capacités d'échange de données aux terminaux de communication, capacités qui peuvent être utilisées pour effectuer des paiements, un peu comme si le terminal de communication imitait le comportement d'une carte de paiement sans contact.

De nombreuses rumeurs, souvent infondées, laissent entendre qu'une communication ou qu'un paiement réalisé sans contact serait peu sur. Il est également souvent rapporté que les dispositifs seraient peu surs en eux même et qu'il serait possible de récupérer les données qui sont contenus dans ces dispositifs à l'insu de l'utilisateur. Bien que ces rumeurs soient souvent sans fondement, il existe cependant des risques lors de la transmission de données entre les dispositifs impliqués (cartes, terminal de communication, terminal de paiement) et notamment lors de la transmission de données de paiement. Les risques, cependant, ne proviennent pas de la technologie employée, en elle-même, mais généralement de l'utilisateur lui-même. Ainsi par exemple, dans le cas d'un terminal de communication utilisant l'interface NFC pour effectuer un paiement, il est possible que l'utilisateur ait installé une application peu sure, voire une application malveillante, dont l'objectif est d'utiliser des données de paiement à des fins de fraudes. La situation est la même du côté du terminal du commerçant.

Par exemple, dans le cas d'une carte à puce communiquant par NFC ses identifiants bancaires à un smartphone le problème suivant se pose. Les données (transmises par la carte) sont non chiffrées (dû à un manque de capacité de calcul de la part de la carte). Ainsi, la sécurité, dans le cas d'un paiement sans contact classique (carte sans contact-terminal de paiement) repose sur le fait que seul le terminal de paiement « écoute » les données transmises (en champ proche) par la carte ; on suppose que terminal se comporte de manière honnête (il est sécurisé et certifié) : dans ces scénarios classiques, le terminal de paiement qui traite la transaction de paiement est un dispositif sécurisé. Il a été conçu pour prévenir les intrusions, tant matérielles que logicielles.

Dans le cas d'un smartphone il est difficile d'empêcher une application malveillante d'être installée. Par exemple tout un chacun peut proposer une application sur un magasin d'application, et bien que le code des applications soit vérifié il a été prouvé qu'il est possible de d'y proposer des applications malveillantes. Une fois disponible sur le magasin d'application, l'application malveillante peut être téléchargée par tous les utilisateurs de smartphones compatibles avec cette application.

L'application malveillante a alors accès aux commandes proposées par le système d'exploitation du terminal de communication. Or, le système d'exploitation des terminaux de communication propose une interface applicative (API) qui permet d'avoir accès aux données applicatives transmises par l'intermédiaire de l'interface NFC du terminal de communication. L'application malveillante peut alors détecter le début d'une transmission de données par voie NFC et obtenir, en toute simplicité, des données issues d'une carte de paiement sans contact (par exemple le PAN de la carte, le nom du porteur, etc.).

Cela peut également être le cas pour le terminal de communication qui transmet des données de paiement sans contact à un terminal de paiement : le cas de figure est le même que précédemment, sauf que l'application malveillante intercepte les données lors de leur transmission (depuis le terminal de communication vers le terminal de paiement) et pas à la réception de ces données par le terminal de communication. Pour ce faire, l'application malveillante tire parti du fait qu'une seule puce NFC est présente sur le terminal de communication et que les données « sensibles » issues par exemple d'un environnement de confiance (sécurisé) du terminal de communication transitent quand même par l'interface NFC et par le biais de l'interface applicative « standard ».

WO 2004/012352 A1 se réfère à un téléphone portable 550, muni d'un module de lecture / écriture de carte à puce sans contact 500 connecté au téléphone 550 via un logement de carte 552 pour module d'identification (universel) d'abonné (SIM / USIM).

Il existe donc un besoin de fournir une solution à ce problème qui offre une sécurisation des données transmises au terminal de paiement (ou au terminal de communication), même dans le cas d'un échange de données non sécurisé.

### 3. Résumé de l'invention

La technique proposée ne pose pas ces problèmes de l'art antérieur. Plus particulièrement, elle apporte une solution simple à la problématique préalablement identifiée. Cette solution est entièrement compatible avec les dispositifs et protocoles existants. La solution, à la différence de solutions qui pourraient être proposées, ne repose pas sur un chiffrement des données, mais sur une modification plus subtile de l'émission/réception de données entre le moyen de paiement (carte de paiement sans contact, terminal de communication) et le dispositif de paiement (terminal de communication, terminal de paiement).

Plus particulièrement, il est proposé de modifier la fréquence à laquelle le moyen de paiement est sollicité pour effectuer la transmission des données de paiement, tout en mettant en œuvre un mécanisme de traitement particulier du signal reçu du moyen de paiement, comme une interface applicative sécurisée.

Le procédé mis en œuvre permet ainsi, à une application légitime, disposant de droits pour effectuer un paiement, d'obtenir les données de paiement de manière transparente. Le procédé mis en œuvre permet également d'éviter que des applications malveillantes espionnent les données transmises à l'application légitime.

Plus généralement, l'invention se rapporte à un procédé de traitement de données par un dispositif électronique d'acquisition de données communiquant avec un dispositif électronique de fourniture de données en utilisant une technologie de communication sans fil à courte portée NFC définissant une fréquence de transmission/réception de référence, le dispositif électronique d'acquisition de données comprenant : une interface applicative publique (PuAPI) accessible par une couche applicative (AppLyr), qui fait appel à l'interface applicative publique (PuAPI) pour transmettre et recevoir des données de la part d'un module NFC (ModNFC) relié à une antenne d'émission/réception (Ant); et une interface applicative privée (PrAPI) accessible par un composant de détermination de fréquence (CMF) et par une couche applicative sécurisée (SecApL), le procédé comprenant les étapes suivantes, mises en œuvre par le composant de détermination de fréquence (CMF) :
- modification de la fréquence de transmission/réception de données du module NFC (ModNFC) en appliquant un paramètre de modification (PMF) à la fréquence de transmission/réception de référence,
- récupération d'un signal issu du module NFC et transformation de ce signal pour obtenir des données décodées à la fréquence de transmission modifiée, et
- transmission des données décodées à la couche applicative sécurisée (SecApL) par l'intermédiaire de l'interface applicative privée (PrAPI)..

Ainsi, une application malveillante n'est pas en mesure d'obtenir de l'information en surveillant la fréquence de référence puisque celle-ci n'est pas utilisée pour transmettre et recevoir des données.

Selon une caractéristique particulière, ledit composant de détermination de fréquence est sous le contrôle exclusif d'un environnement d'exécution sécurisé dudit dispositif électronique.

Ainsi, une application malveillante ne peut pas avoir accès au composant et ne peut donc pas prendre connaissance, par l'intermédiaire de ce composant, du signal de réponse.

Selon une caractéristique particulière, ledit procédé comprend :
- une étape de réception, par le composant de détermination de fréquence du dispositif électronique d'acquisition de données, d'une requête d'obtention de donnée ;
- une étape d'obtention, par le composant de détermination de fréquence, du paramètre de détermination de fréquence ;
- l'étape de modification, par le composant de détermination de fréquence, de la fréquence d'un signal d'interrogation à destination du dispositif de fourniture de données, en fonction du paramètre de détermination de fréquence, délivrant la fréquence d'interrogation ;
- une étape de transmission, par le module NFC, du signal d'interrogation au dispositif électronique de fourniture de données à ladite fréquence d'interrogation.

Ainsi, la fréquence modifiée n'est pas pré-codée, mais dépend d'un paramètre de détermination de fréquence dont la valeur peut par exemple être évolutive dans le temps, ou dépendre d'un index donné.

Selon une caractéristique particulièré, l'étape de récupération du signal issu du module NFC et de transformation de ce signal pour obtenir des données décodées à la fréquence de transmission modifiée comprend :
- une étape de réception, en provenance du dispositif électronique de fourniture de données, d'un signal de réponse, échantillonné à ladite fréquence d'interrogation ;
- une étape d'obtention, à partir dudit signal de réponse, en fonction de ladite fréquence d'interrogation, d'une suite de bits ;
- une étape de transformation de ladite suite de bits en un ensemble de données ;
- une étape de transmission dudit ensemble de données.

Ainsi, comme la transmission de données, dans le cadre d'une technologie en champ proche, entraine (dans le mode de réponse passif) une retransmission à la même fréquence que la fréquence d'émission, le signal reçu est également échantillonné à la fréquence d'interrogation. Dès lors, une application malveillante, qui espionne les données transmises « à la fréquence normale » (typiquement 13,56MHz) ne peut pas percevoir cette réponse, qui est faite à une fréquence différente de la fréquence de référence.

Selon une caractéristique particulière, l'étape de réception, par le composant de détermination de fréquence du dispositif électronique d'acquisition de données, de la requête d'obtention de donnée, est au moins en partie mise en œuvre par l'interface applicative privée et comprend une étape de délivrance d'une autorisation applicative.

Ainsi, l'accès au composant de détermination de fréquence est contrôlé : dès lors, une application malveillante, qui ne dispose pas, par définition, d'autorisation d'appel de cette interface applicative privée, ne peut pas avoir accès aux messages (transmis ou reçus) par l'intermédiaire du composant de détermination de fréquence.

Selon une caractéristique particulière, l'étape de délivrance d'une autorisation applicative comprend :
- une étape d'obtention d'une donnée représentative d'un identifiant applicatif de l'application appelante, dite identifiant applicatif ;
- une étape optionnelle d'obtention d'une donnée représentative d'une couche applicative appelante, dite identifiant de couche applicative ;
- une étape de détermination d'une autorisation d'exécution du composant de détermination en fonction dudit identifiant applicatif et/ou dudit identifiant de couche applicative.

Ainsi, en fonction de données préétablies, par exemple par le constructeur du dispositif d'interrogation, une liste d'applications et/ou une liste de couches applicatives particulière est définie comme ayant un accès au module de détermination de fréquence.

Selon une caractéristique particulière, le paramètre de détermination de fréquence est un facteur multiplicatif.

Selon une caractéristique particulière, ledit facteur multiplicatif a une valeur comprise entre 1,1 et 1,8.

Cette plage de valeur fonctionne avec une majorité de dispositifs électroniques de fourniture de données.

Selon une caractéristique particulière, la valeur du facteur multiplicatif est déterminée aléatoirement dans une plage de valeur comprise entre 1,1 et 1,8.

Ainsi, une application malveillante ne peut prédire la valeur du facteur multiplicatif.

Selon un caractéristique particulière, la valeur du facteur multiplicatif est déterminée par le composant de détermination de fréquence lors de la réception d'une requête d'obtention de données sans contact.

Ainsi, la valeur du facteur multiplicatif ne peut pas être déduite par une application malveillante sur la base d'observation antérieure, car cette valeur, décidée au moment de la réception de la requête est susceptible d'évoluer à chaque transaction.

Selon un autre aspect, l'invention se rapporte également à un dispositif électronique d'acquisition de données, communiquant avec un dispositif électronique de fourniture de données en utilisant une technologie de communication sans fil à courte portée NFC définissant une fréquence de transmission/réception de référence, le dispositif électronique d'acquisition de données comprenant :
- une interface applicative publique (PuAPI) accessible par une couche applicative (AppLyr), qui fait appel à l'interface applicative publique (PuAPI) pour transmettre et recevoir des données de la part d'un module NFC (ModNFC) relié à une antenne d'émission/réception (Ant); et
- une interface applicative privée (PrAPI) accessible par un composant de détermination de fréquence (CMF) et par une couche applicative sécurisée (SecApL)
le composant de détermination de fréquence (CMF) étant configuré pour :
- modifier la fréquence de transmission/réception de données du module NFC (ModNFC) en appliquant un paramètre de modification (PMF) à la fréquence de transmission/réception de référence,
- récupérer un signal issu du module NFC et transformer ce signal pour obtenir des données décodées à la fréquence de transmission modifiée, et
- accéder à l'interface applicative privée (PrAPI) pour transmettre les données décodées à la couche applicative sécurisée (SecApL).

Plus généralement, un tel dispositif comprend des moyens de mise en œuvre des étapes des procédés décrits précédemment.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée ;
- la figure 2 présente un mode de réalisation appliqué à un terminal de communication souhaitant obtenir des données en provenance d'une carte de paiement ;
- la figure 3 décrit une mise en œuvre du procédé de traitement de données dans le mode de réalisation de la figure 2.
- la figure 4 décrit un .terminal de communication modifié pour la mise en œuvre de la technique proposée.

### 5. Description

### 5.1. Principe général

Comme indiqué précédemment, la technique proposée permet de résoudre les problèmes de l'art antérieur. Plus particulièrement, la technique proposée permet de contrer l'espionnage frauduleux réalisé par une application malveillante.

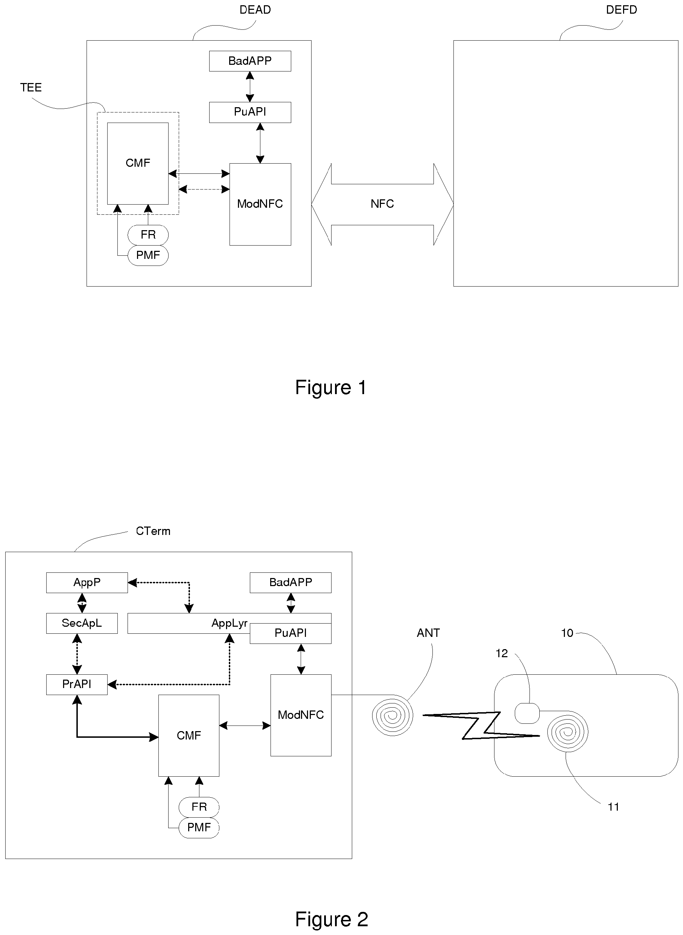

La technique proposée présente une solution pour communiquer des données secrètes, en utilisant une antenne NFC, dans un environnement non sécurisé. La figure 1 présente le principe générale de la technique proposée.

Plus particulièrement, il est proposé de modifier la fréquence à laquelle un dispositif électronique d'acquisition de données (DEAD), requière l'obtention de données auprès d'un dispositif électronique de fourniture de données (DEFD), le dispositif électronique d'acquisition de données (DEAD) et le dispositif électronique de fourniture de données (DEFD) communicant l'un avec l'autre en utilisant une technologie de communication sans fil à courte portée (NFC) définissant une fréquence de transmission/réception de référence (par exemple 13,56 MHz). La détermination de la fréquence d'interrogation est réalisée à partir d'un paramètre de détermination de fréquence (PMF) et de la fréquence de référence (FR) par un composant de détermination (CMF). Le composant (CMF) permet de modifier la fréquence à laquelle le module NFC (ModNFC) transmet le signal NFC. En fonction des modes de réalisation, l'étape de détermination de la fréquence (d'interrogation) consiste à appliquer une modification de la fréquence de manière à effectuer l'interrogation à une fréquence inférieure ou supérieure à la fréquence de référence. La fréquence d'interrogation n'est donc pas la fréquence de référence, mais une fréquence différente de la fréquence de référence et le paramètre de détermination de fréquence (PMF) est utilisé pour déterminer quelle est cette fréquence.

En fonction des modes de réalisation et des contraintes opérationnelles, le composant de détermination de fréquence (CMF) peut être sous le contrôle exclusif d'un environnement d'exécution sécurisé dudit dispositif électronique (TEE). Dès lors, seul cet environnement sécurisé (qui peut être un module sécurisé du dispositif électronique), est en mesure d'utiliser le composant de détermination de fréquence.

Par ailleurs, pour garantir un accès sécurisé au composant de détermination de fréquence, un mécanisme de contrôle d'autorisation est mise en œuvre. Dans ce mécanisme, seules certaines applications (qui s'exécutent au sein du dispositif électronique d'acquisition de données) ou certaines couches applicatives sont en mesure d'accéder au composant de détermination de fréquence. La décision d'accès est par exemple mise en œuvre par l'environnement sécurisé, sur la base d'une liste d'identifiants d'applications autorisées et/ou de couches applicatives autorisées. Les applications et/ou couches applicatives autorisées sont par exemple déterminées au moment du paramétrage du dispositif électronique, sous la forme d'une base de données interne (de type fichier à plat ou fichier XML par exemple). L'accès et/ou la transmission d'une requête d'obtention de données, au composant de détermination de fréquence, est mise en œuvre par l'intermédiaire d'une interface applicative privée, qui permet de requérir les données. Le composant de détermination de fréquence agit comme un intermédiaire (de détermination de fréquence d'interrogation) entre l'interface applicative privée et le module (classique) NFC qui va effectivement construire et transmettre le signal (à partir de la fréquence). Le composant de détermination de fréquence n'est donc pas uniquement utilisé pour modifier la fréquence de transmission du signal, mais il est également utilisé pour décoder le signal de réponse reçu et transformer celui-ci en une suite de bits : il s'agit donc d'un composant passerelle. Ce mécanisme comprend :
- une étape d'obtention d'une donnée représentative d'un identifiant applicatif de l'application appelante, dite identifiant applicatif ; et/ou
- une étape d'obtention d'une donnée représentative d'une couche applicative appelante, dite identifiant de couche applicative ;
- une étape de détermination d'une autorisation d'exécution du composant de détermination en fonction dudit identifiant applicatif et/ou dudit identifiant de couche applicative.

Avec cette technique, une application malveillante (BadAPP) qui est installée sur le dispositif électronique d'acquisition de données (DEAD) ne peut pas accéder aux données effectivement reçues par le composant de détermination de fréquence (CMF). Au mieux, cette application malveillante (BadAPP) peut accéder, par l'intermédiaire d'une interface applicative publique (PuAPI), à des données décodées à partir du module NFC (ModNFC). Or comme ce module est configuré pour traiter le signal qu'il reçoit à une fréquence de référence, il n'est pas en mesure de traiter un signal avec une fréquence supérieure.

Dans la suite, un mode de réalisation est décrit en lien avec l'obtention de données de paiement par l'intermédiaire d'un terminal de communication d'un utilisateur. Il est bien entendu que la mode de réalisation qui suit est donné à titre illustratif et que les techniques décrites dans ce mode de réalisation peuvent être combinées ensemble ou unitairement afin de s'adapter à des conditions opérationnelles qui peuvent être différentes du paiement, comme par exemple le transfert de fichier entre deux terminaux, ou l'obtention de données autres que des données bancaires.

### 5.2. Description d'un mode de réalisation

Dans ce mode de réalisation, il est possible d'appliquer la technique proposée par exemple pour une communication de smartphone (ou tablette ou autre) à smartphone, smartphone à terminal de paiement, carte à puce à smartphone, etc. Elle permet de communiquer par exemple des identifiants bancaires d'une carte (de paiement) au smartphone en utilisant le matériel NFC, même dans le cas où une application malveillante installée sur le smartphone est susceptible d'appeler des interfaces applicatives fournies par le système d'exploitation permettant d'écouter la communication NFC. Elle permet aussi de se passer de chiffrement cryptographique de la part de l'émetteur (per exemple la carte de paiement).

Pour atteindre ces résultats, le principe général consiste en l'application d'une modulation de fréquence. Plus précisément, au lieu d'utiliser une fréquence d'interrogation normalisée (par exemple 13,56 Mhz), le dispositif de paiement interroge le moyen de paiement avec une fréquence supérieure (par exemple 15,60 Mhz). Cette fréquence d'interrogation est la fréquence à laquelle la requête d'obtention des donnés bancaires est transmise par le dispositif de paiement au moyen de paiement. Les inventeurs ont en effet constaté qu'une augmentation contrôlée de la fréquence d'interrogation du moyen de paiement n'a pas nécessairement un impact sur la capacité du moyen de paiement à répondre à la requête transmise.

Pour comprendre le fondement de la technique proposée par les inventeurs, il est nécessaire de se reporter au fonctionnement d'un moyen de paiement NFC, comme une carte de paiement par exemple. Une carte de paiement NFC comprend un circuit imprimé, ce circuit imprimé étant utilisé pour réaliser un traitement de données. En règle générale, le traitement de données consiste à répondre, selon une norme d'échange de données particulière, à une ou plusieurs commandes reçues de la part du terminal de paiement. Pour recevoir ces commandes, le circuit imprimé est relié à une antenne. Cette antenne (qui est généralement invisible et disposée dans le substrat de la carte) a deux fonctions : la première fonction est de transmettre une donnée (une commande) au processeur pour que celle-ci puisse être traitée. La deuxième fonction est d'alimenter le circuit imprimé pour qu'il puisse effectuer les traitements demandés. Ainsi, une carte de paiement NFC comprend une antenne et un convertisseur de signal associés au circuit imprimé. L'antenne perçoit le signal (alternatif) émis à distance par le dispositif de paiement, et le convertisseur transforme ce signal d'une part en un courant continu qui alimente la puce, d'autre part en un courant alternatif appelé horloge qui sert à synchroniser les échanges de la puce et du dispositif de paiement dans le temps.

Pour résoudre les problèmes de sécurité posés par l'art antérieur, les inventeurs ont eu l'idée astucieuse d'augmenter la fréquence du signal alternatif transmis (dans des proportions dépendant du matériel) par le dispositif de paiement (et reçu par le moyen de paiement) tout en conservant les fonctionnalités de réception, traitement et transmission de données du moyen de paiement.

Pour sécuriser le processus, les inventeurs définissent un nouveau composant logiciel et/ou matériel de modulation, composant qui est implanté au sein du dispositif de paiement. Astucieusement, ce composant logiciel et/ou matériel de modulation permet d'une part de moduler la fréquence de l'horloge du module de transmission/réception de données NFC (module NFC) et d'autre part de traiter et décoder les données reçues (c'est à dire les données reçues par l'intermédiaire du module NFC. Typiquement, le facteur multiplicatif de la fréquence est compris entre 1,1 et 1,8. D'autres valeurs peuvent être mises en œuvre, en fonction des besoins et de l'architecture matérielle. Le composant de détermination utilise donc une fréquence comprise entre 1,1 et 1,8 fois la fréquence standard de transmission en champ proche qui est de 13,56 MHz, soit une fréquence comprise entre 14,916 Mhz et 24,408 MHz. De manière complémentaire, il est également possible de diminuer la fréquence de transmission : dans ce cas le facteur multiplicatif est inférieur à 1. Typiquement, un facteur multiplicatif compris entre 0,7 et 0,9 pourrait être appliqué.

Un mode de réalisation est présenté en relation avec la figure 2.

Un moyen de paiement NFC (10) (par exemple une carte) comprend une antenne NFC (11) qui est relié à un circuit imprimé (12). Un dispositif de paiement (CTerm) (par exemple un smartphone) comprend un module NFC (ModNFC) et est relié à une antenne d'émission/réception (Ant) et à une couche dite applicative (AppLyr).

En fonctionnement normal (par exemple un fonctionnement d'échange de fichier), la couche applicative (AppLyr) fait appel à une interface applicative publique (PuAPI) pour transmettre et recevoir des données de la part du module NFC (ModNFC).

Une couche applicative est définie comme un ensemble de matériels et/ou de logiciels qui peuvent avoir accès à des données provenant d'une ou plusieurs couches plus « basses », c'est à dire des couches (empilées ou non) qui traitent directement ou indirectement les signaux physiques transitant par les composants matériels du dispositif (ici il s'agit d'un dispositif de paiement de paiement). L'accès, par une couche applicative, aux données est effectué par l'intermédiaire d'une interface applicative, qui agit en quelque sorte comme une porte d'accès à des données provenant d'une couche inférieure. Plusieurs couches applicatives peuvent être empilées les unes sur les autres, comme cela est définit par exemple dans le modèle OSI pour ce qui est des protocoles réseaux.

En fonctionnement alternatif, selon la présente technique, (par exemple un fonctionnement pour la mise en œuvre d'un paiement par une application de paiement AppP), un composant de détermination (CMF), modifie la fréquence de transmission/réception de données du module NFC (ModNFC). Pour ce faire, la composant de détermination (CMF) applique un paramètre de modification prédéterminé (PMF) au module NFC (ModNFC), l'application de ce paramètre entrainant une augmentation (ou une diminution) de la fréquence de transmission, comme expliqué précédemment. Lors de la réception des données, la composant de détermination (CMF) récupère le signal issu du module NFC et transforme ce signal pour obtenir des données décodées à la fréquence de transmission paramétrée. Le composant de détermination (CMF) a accès à une interface applicative privée (PrAPI) qui est utilisé pour transmettre les données du composant de détermination (CMF) à la couche applicative (AppLyr) ou à une couche applicative sécurisée (SecApL).

L'interface applicative privée (PrAPI) n'est, selon ce mode de réalisation général, accessible uniquement que pour le composant de détermination (CMF) et alternativement ou cumulativement, à la couche applicative sécurisée (SecApL) ou à certaines applications de la couche applicative (AppLyr).

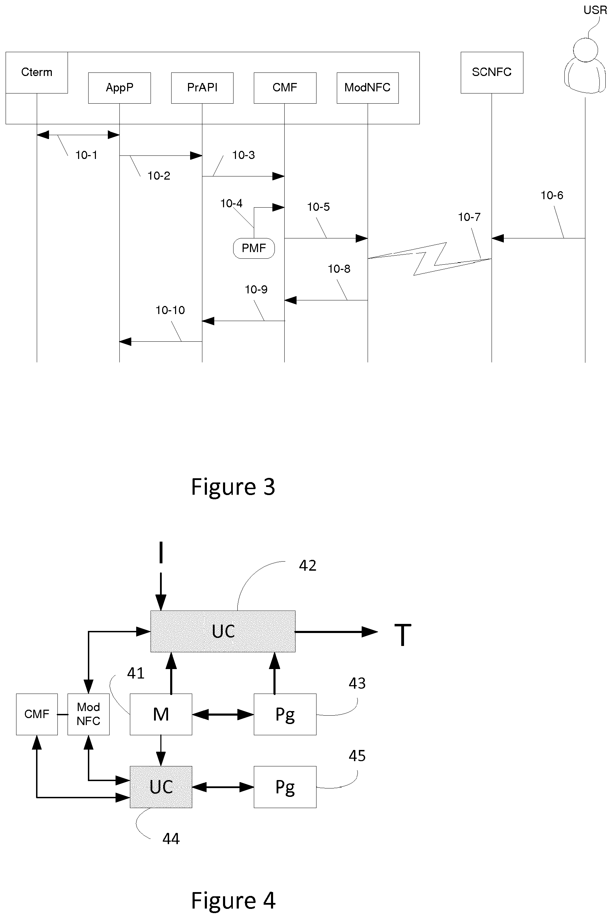

On décrit, en relation avec la figure 3, un mode de réalisation illustrant le traitement d'une transaction de paiement qui met en œuvre la technique et les composants précédemment décrits.

Un utilisateur (USR) souhaite effectuer une transaction de paiement avec son terminal de communication (CTerm) muni d'une interface NFC. Pour effectuer le paiement, l'utilisateur va apposer sa carte de paiement (SCNFC) sur le terminal de communication (CTerm). Cependant, préalablement, la méthode suivante est mise en œuvre :
- une application de paiement (AppP) est ouverte (10-1) (soit par l'utilisateur USR lui-même, soit par une application d'un marchand, précédemment installée sur le terminal de communication et auprès de laquelle l'utilisateur souhaite effectuer un achat) ;
- l'application de paiement (AppP), par exemple après avoir affichée le logo de paiement sans contact sur l'écran du terminal de communication (Cterm), transmet (10-2), par l'intermédiaire de l'interface applicative privée (PrAPI), une requête d'obtention de données sans contact ; cette requête est transmise (10-3) au composant de détermination (CMF) ;
- le composant de détermination (CMF) obtient (10-4) un paramètre de détermination (PMF) qu'il utilise ensuite pour déterminer la fréquence d'interrogation et transmettre (10-5) au module NFC (ModNFC), une requête d'obtention de données sans contact, selon un protocole prédéterminé et avec une fréquence d'interrogation à partir du paramètre de détermination (PMF) ;

Lorsqu'il constate que le logo de paiement sans contact est affiché, l'utilisateur appose (10-6) sa carte de paiement sur le terminal de communication. La carte reçoit le signal provenant du terminal de communication et les données de la carte sont transmises (10-7), après traitement éventuel, sous la forme d'un signal de réponse au module NFC (ModNFC) du terminal de communication.
- le composant de détermination (CMF) obtient (10-8) le signal reçu de la part du module NFC (ModNFC) et décode celui-ci à la fréquence d'interrogation ;
- le composant de détermination (CMF) transmet (10-9), par l'intermédiaire de l'interface applicative privée (PrAPI)(10-10), les données décodées à l'application de paiement (AppP) qui peut les utiliser pour effectuer ou finaliser la transaction de paiement.

Il y a plusieurs avantages à cette mise en œuvre. Tout d'abord, la fréquence d'interrogation modifie le signal reçu. Celui-ci est donc difficilement interprétable par d'éventuels dispositifs espions (c'est-à-dire des dispositifs additionnels environnants qui pourraient tenter d'intercepter des données). De plus, comme la fréquence dépend d'un paramètre de modulation (qui peut être variable pour un dispositif donnée), le fait de connaître une fréquence ne permet pas de contourner la présente technique. On précise par ailleurs que ce paramètre peut être obtenu de façon aléatoire ou pseudo aléatoire, dans une plage de paramétrage donnée : par exemple une valeur aléatoire dans une plage de 1kHz, de 10 kHz ou de 100 kHz.

De plus, l'architecture et la méthode proposé offre un avantage du point de vue de l'application malveillante (éventuellement installé sur le terminal de communication). En effet, la technique proposée permet de tromper cette éventuelle application : l'application malveillante, en appelant l'interface applicative publique, obtient, en provenance du module NFC, des données erronées. En effet, l'interface applicative publique, n'étant pas informée de la détermination de la fréquence d'interrogation, tente de transformer le signal selon une fréquence standard. Or une telle tentative est vouée à l'échec et entraine la transmission soit de données erronées soit d'erreurs à l'application malveillante.

### 5.3. Autres caractéristiques et avantages

On décrit, en relation avec la figure 4 un terminal de communication mis en œuvre pour réaliser une transmission de données de données dans le cadre d'un processus de paiement, selon le procédé décrit préalablement.

Par exemple, le terminal de communication comprend une mémoire 41 constituée d'une mémoire tampon, une processeur de traitement général 42, par exemple un microprocesseur, et pilotée par un programme d'ordinateur 43, et une mémoire sécurisée un processeur de traitement sécurisé 44 (TEE par exemple), pilotée par un programme d'ordinateur 45, ces processeurs de traitement mettant en œuvre les procédés de traitement et de transmission/réception de données tels que décrit précédemment pour effectuer le traitement de données à destination et en provenance d'une interface sans contact.

À l'initialisation, les instructions de code du programme d'ordinateur 45 sont par exemple chargées dans une mémoire avant d'être exécutées par le processeur de traitement sécurisée 44.

Le processeur de traitement sécurisé 44 reçoit (par l'intermédiaire d'une interface logicielle ou matérielle) en entrée au moins une requête d'obtention de données sans contact en provenance par exemple du processeur de traitement général 42. Le processeur de traitement sécurisé 44 met en oeuvre les étapes du procédé de transmission de données, selon les instructions du programme d'ordinateur 45 pour obtenir (à une fréquence prédéfinie), un ou plusieurs signaux en provenance d'un moyen de paiement sans contact, signaux qui sont transformés en données qui sont transmises au processeur de traitement général 42. Le processeur de traitement général 42 effectue un traitement de ces données pour par exemple effectuer une transaction de paiement.

Pour cela, le terminal de communication comprend, outre la mémoire tampon 41, des moyens de communications, tels que des modules de communication réseau, des moyens de transmission de donnée et des circuits de transmission de données entre les divers composants du terminal de communication.

Ces moyens peuvent se présenter sous la forme d'un processeur particulier implémenté au sein du terminal de communication. Selon un mode de réalisation particulier, ce dispositif met en œuvre une application particulière qui est en charge de la réalisation des transactions, cette application étant par exemple fournie par le fabricant du processeur en question afin de permettre l'utilisation dudit processeur ou par un fournisseur de solution de paiement pour des terminaux "ouverts". Pour ce faire, le processeur comprend des moyens d'identification uniques. Ces moyens d'identification uniques permettent d'assurer l'authenticité du processeur.

Comme indiqué, le terminal de communication comprend des moyens de communication en champs proches, dits NFC (ModNFC) et des moyens de transmission et de réception de données en provenance de réseaux de communications. Ces moyens se présentent également comme des interfaces de communications permettant d'échanger des données sur des réseaux de communication, des moyens d'interrogations et de mise à jour de base de données. Plus particulièrement, les moyens de communication en champs proches peuvent être configurés pour transmettre et recevoir des données en fonction d'une fréquence de transmission/réception, cette fréquence pouvant être modulée (d'une transmission à l'autre) en fonction d'un paramètre de modulation, ce paramètre de modulation étant défini soit par le processeur de traitement sécurisé (lorsqu'il existe), soit par l'intermédiaire d'un environnement sécurisé (TEE) dépendant du système d'exploitation du terminal de communication et est accessible par l'intermédiaire d'un composant de détermination (CMF).

## Revendications

1. Procédé de traitement de données par un dispositif électronique d'acquisition de données (DEAD, CTerm) communiquant avec un dispositif électronique de fourniture de données (DEFD, 10, SCNFC) en utilisant une technologie de communication sans fil à courte portée NFC définissant une fréquence de transmission/réception de référence (FR), le dispositif électronique d'acquisition de données (DEAD, CTerm) comprenant :
- une interface applicative publique (PuAPI) accessible par une couche applicative (AppLyr), qui fait appel à l'interface applicative publique (PuAPI) pour transmettre et recevoir des données de la part d'un module NFC (ModNFC) relié à une antenne d'émission/réception (Ant); et
- une interface applicative privée (PrAPI) accessible par un composant de détermination de fréquence (CMF) et par une couche applicative sécurisée (SecApL),
le procédé comprenant les étapes suivantes, mises en œuvre par le composant de détermination de fréquence (CMF) :
- modification (10-4, 10-5, 10-7) de la fréquence de transmission/réception de données du module NFC (ModNFC) en appliquant un paramètre de modification (PMF) à la fréquence de transmission/réception de référence (FR),
- récupération (10-8) d'un signal issu du module NFC et transformation de ce signal pour obtenir des données décodées à la fréquence de transmission modifiée, et
- transmission (10-9, 10-10) des données décodées à la couche applicative sécurisée (SecApL) par l'intermédiaire de l'interface applicative privée (PrAPI).

2. Procédé de traitement de données, selon la revendication 1, **caractérisé en ce que** ledit composant de détermination de fréquence (CMF) est sous le contrôle exclusif d'un environnement d'exécution sécurisé (TEE) dudit dispositif électronique.

3. Procédé de traitement de données selon la revendication 1, **caractérisé en ce qu'**il comprend :
- une étape de réception (10-1, 10-2, 10-3), par le composant de détermination de fréquence (CMF) du dispositif électronique d'acquisition de données (DEAD, CTerm), d'une requête d'obtention de donnée ;
- une étape d'obtention (10-4), par le composant de détermination de fréquence (CMF), du paramètre de détermination de fréquence (PMF) ;
- une étape de modification (10-4, 10-5), par le composant de détermination de fréquence (CMF), de la fréquence d'un signal d'interrogation à destination du dispositif de fourniture de données (DEFD, 10, SCNFC), en fonction du paramètre de détermination de fréquence, (PMF) délivrant la fréquence d'interrogation ;
- une étape de transmission (10-7), par le module NFC (ModNFC), du signal d'interrogation au dispositif électronique de fourniture de données (DEFD, 10, SCNFC) à ladite fréquence d'interrogation.

4. Procédé de traitement de données selon la revendication 3, **caractérisé en ce que** l'étape de récupération (10-8) du signal issu du module NFC (ModNFC) et de transformation de ce signal pour obtenir des données décodées à la fréquence de transmission modifiée comprend :
- une étape de réception (10-7, 10-8), en provenance du dispositif électronique de fourniture de données (DEFD, 10, SCNFC), d'un signal de réponse, échantillonné à ladite fréquence d'interrogation ;
- une étape d'obtention, à partir dudit signal de réponse, en fonction de ladite fréquence d'interrogation, d'une suite de bits ;
- une étape de transformation de ladite suite de bits en un ensemble de données ;
- une étape de transmission (10-9, 10-10) dudit ensemble de données.

5. Procédé de traitement de données selon la revendication 3, **caractérisé en ce que** ladite étape de réception (10-1, 10-2), par le composant de détermination de fréquence (CMF) du dispositif électronique d'acquisition de données (DEFD, 10, SCNFC), de la requête d'obtention de donnée est au moins en partie mise en œuvre par l'interface applicative privée (PrAPI) et comprend une étape de délivrance d'une autorisation applicative.

6. Procédé de traitement de données selon la revendication 5, **caractérisé en ce que** l'étape de délivrance d'une autorisation applicative comprend :
- une étape d'obtention d'une donnée représentative d'un identifiant applicatif de l'application appelante (AppP), dite identifiant applicatif ; et/ou
- une étape d'obtention d'une donnée représentative d'une couche applicative appelante (AppLyr), dite identifiant de couche applicative ;
- une étape de détermination d'une autorisation d'exécution du composant de détermination (CMF) en fonction dudit identifiant applicatif et/ou dudit identifiant de couche applicative.

7. Procédé de traitement de données selon la revendication 1, **caractérisé en ce que** le paramètre de détermination de fréquence (PMF) est un facteur multiplicatif.

8. Procédé de traitement de données selon la revendication 7, **caractérisé en ce que** ledit facteur multiplicatif a une valeur comprise entre 1,1 et 1,8.

9. Procédé de traitement de données selon la revendication 7, **caractérisé en ce que** la valeur du facteur multiplicatif est déterminée aléatoirement dans une plage de valeur comprise entre 1,1 et 1,8.

10. Procédé de traitement de données selon la revendication 7, **caractérisé en ce que** la valeur du facteur multiplicatif est déterminée par le composant de détermination de fréquence (CMF) lors de la réception (10-1, 10-2, 10-3) d'une requête d'obtention de données sans contact.

11. Dispositif électronique d'acquisition de données (DEAD, CTerm) communiquant avec un dispositif électronique de fourniture de données (DEFD, 10, SCNFC) en utilisant une technologie de communication sans fil à courte portée NFC définissant une fréquence de transmission/réception de référence (FR), le dispositif électronique d'acquisition de données (DEAD, CTerm) comprenant :
- une interface applicative publique (PuAPI) accessible par une couche applicative (AppLyr), qui fait appel à l'interface applicative publique (PuAPI) pour transmettre et recevoir des données de la part d'un module NFC (ModNFC) relié à une antenne d'émission/réception (Ant); et
- une interface applicative privée (PrAPI) accessible par un composant de détermination de fréquence (CMF) et par une couche applicative sécurisée (SecApL)
le composant de détermination de fréquence (CMF) étant configuré pour :
- modifier (10-4, 10-5, 10-7) la fréquence de transmission/réception de données du module NFC (ModNFC) en appliquant un paramètre de modification (PMF) à la fréquence de transmission/réception de référence (FR),
- récupérer (10-7, 10-8) un signal issu du module NFC et transformer ce signal pour obtenir des données décodées à la fréquence de transmission modifiée, et
- accéder (10-9, 10-10) à l'interface applicative privée (PrAPI) pour transmettre les données décodées à la couche applicative sécurisée (SecApL).

12. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de traitement de données selon la revendication 1, lorsqu'il est exécuté sur un processeur.

## Patentansprüche

1. Verfahren zum Verarbeiten von Daten durch eine elektronische Datenerfassungsvorrichtung (DEAD, CTerm), die mit einer elektronischen Datenversorgungsvorrichtung (DEFD, 10, SCNFC) unter Verwendung einer drahtlosen Nahbereichsübertragungstechnologie NFC kommuniziert, die eine Übertragungs-/Empfangs-Referenzfrequenz (FR) definiert, wobei die elektronische Datenerfassungsvorrichtung (DEAD, CTerm) aufweist:
- eine öffentliche Anwendungsschnittstelle (PuAPI), die durch eine Anwendungsschicht (AppLyr) zugänglich ist, die die öffentliche Anwendungsschnittstelle (PuAPI) in Anspruch nimmt, um Daten von einem NFC-Modul (ModNFC) zu senden und zu empfangen, das mit einer Antenne zum Senden/Empfangen (Ant) verbunden ist, und
- eine private Anwendungsschnittstelle (PrAPI), die durch eine Frequenzbestimmungskomponente (CMF) und durch eine gesicherte Anwendungsschicht (SecApL) zugänglich ist,
wobei das Verfahren die folgenden Schritte aufweist, die durch die Frequenzbestimmungskomponente (CMF) umgesetzt werden:
- Ändern (10-4, 10-5, 10-7) der Datenübertragungs-/Datenempfangsfrequenz des NFC-Moduls (ModNFC) unter Anwendung eines Änderungsparameters (PMF) auf die Übertragungs-/Empfangs-Referenzfrequenz (FR),
- Rückgewinnen (10-8) eines von dem NFC-Modul abgegebenen Signals und Umwandeln dieses Signals, um decodierte Daten bei der geänderten Übertragungsfrequenz zu erhalten, und
- Übertragen (10-9, 10-10) der decodierten Daten an die gesicherte Anwendungsschicht (SecApL) durch die private Anwendungsschnittstelle (PrAPI).

2. Verfahren zum Verarbeiten von Daten nach Anspruch 1, **dadurch gekennzeichnet, dass** die Frequenzbestimmungskomponente (CMF) unter der alleinigen Kontrolle einer gesicherten Ausführungsumgebung (TEE) der elektronischen Vorrichtung ist.

3. Verfahren zum Verarbeiten von Daten nach Anspruch 1, **dadurch gekennzeichnet, dass** es aufweist:
- einen Schritt des Empfangens (10-1, 10-2, 10-3) durch die Frequenzbestimmungskomponente (CMF) der elektronischen Datenerfassungsvorrichtung (DEAD, CTerm) einer Datenerhebungsanfrage,
- einen Schritt des Erhaltens (10-4) durch die Frequenzbestimmungskomponente (CMF) des Frequenzbestimmungsparameters (PMF),
- einen Schritt des Änderns (10-4, 10-5) durch die Frequenzbestimmungskomponente (CMF) der Frequenz eines Abfragesignals an die Datenversorgungsvorrichtung (DEFD, 10, SCNFC) in Abhängigkeit von dem Frequenzbestimmungsparameter (PMF), der die Abfragefrequenz ausgibt,
- einen Schritt des Übertragens (10-7) durch das NFC-Modul (ModNFC) des Abfragesignals an die elektronische Datenversorgungsvorrichtung (DEFD, 10, SCNFC) mit der Abfragefrequenz.

4. Verfahren zum Verarbeiten von Daten nach Anspruch 3, **dadurch gekennzeichnet, dass** der Schritt des Rückgewinnens (10-8) des Signals, das von dem NFC-Modul (ModNFC) abgegeben wird, und des Umwandelns dieses Signals, um decodierte Daten bei der geänderten Übertragungsfrequenz zu erhalten, aufweist:
- einen Schritt des Empfangens (10-7, 10-8) von der elektronischen Datenversorgungsvorrichtung (DEFD, 10, SCNFC) eines Antwortsignals, das mit der Abfragefrequenz abgetastet wird,
- einen Schritt des Erhaltens ausgehend von dem Antwortsignal in Abhängigkeit von der Abfragefrequenz einer Bitfolge,
- einen Schritt des Transformierens der Bitfolge in einen Datensatz,
- einen Schritt des Übertragens (10-9, 10-10) des Datensatzes.

5. Verfahren zum Verarbeiten von Daten nach Anspruch 3, **dadurch gekennzeichnet, dass** der Schritt des Empfangens (10-1, 10-2) durch die Frequenzbestimmungskomponente (CMF) der elektronischen Datenerfassungsvorrichtung (DEFD, 10, SCNFC) der Datenerhebungsanfrage mindestens teilweise durch die private Anwendungsschnittstelle (PrAPI) umgesetzt wird und einen Schritt des Ausgebens einer Anwendungsberechtigung aufweist.

6. Verfahren zum Verarbeiten von Daten nach Anspruch 5, **dadurch gekennzeichnet, dass** der Schritt des Ausgebens einer Anwendungsberechtigung aufweist:
- einen Schritt des Erhaltens einer Dateneinheit, die für eine Anwendungskennung der aufrufenden Anwendung (AppP) repräsentativ ist, die Anwendungskennung genannt wird, und/oder
- einen Schritt des Erhaltens einer Dateneinheit, die für eine aufrufende Anwendungsschicht (AppLyr) repräsentativ ist, die Anwendungsschichtkennung genannt wird,
- einen Schritt des Bestimmens einer Genehmigung zum Ausführen der Bestimmungskomponente (CMF) in Abhängigkeit von der Anwendungskennung und/oder der Anwendungsschichtkennung.

7. Verfahren zum Verarbeiten von Daten nach Anspruch 1, **dadurch gekennzeichnet, dass** der Frequenzbestimmungsparameter (PMF) ein Multiplikationsfaktor ist.

8. Verfahren zum Verarbeiten von Daten nach Anspruch 7, **dadurch gekennzeichnet, dass** der Multiplikationsfaktor einen Wert zwischen 1,1 und 1,8 aufweist.

9. Verfahren zum Verarbeiten von Daten nach Anspruch 7, **dadurch gekennzeichnet, dass** der Wert des Multiplikationsfaktors zufällig in einem Wertebereich zwischen 1,1 und 1,8 bestimmt wird.

10. Verfahren zum Verarbeiten von Daten nach Anspruch 7, **dadurch gekennzeichnet, dass** der Wert des Multiplikationsfaktors durch die Frequenzbestimmungskomponente (CMF) beim Empfangen (10-1, 10-2, 10-3) von einer kontaktlosen Anfrage zum Erhalten von Daten bestimmt wird.

11. Elektronische Datenerfassungsvorrichtung (DEAD, CTerm), die mit einer elektronischen Datenversorgungsvorrichtung (DEFD, 10, SCNFC) unter Verwendung von einer drahtlosen Nahbereichsübertragungstechnologie NFC kommuniziert, die eine Übertragungs-/Empfangs-Referenzfrequenz (FR) definiert, wobei die elektronische Datenerfassungsvorrichtung (DEAD, CTerm) aufweist:
- eine öffentliche Anwendungsschnittstelle (PuAPI), die durch eine Anwendungsschicht (AppLyr) zugänglich ist, die die öffentliche Anwendungsschnittstelle (PuAPI) in Anspruch nimmt, um Daten von einem NFC-Modul (ModNFC) zu senden und zu empfangen, das mit einer Antenne zum Senden/Empfangen (Ant) verbunden ist, und
- eine private Anwendungsschnittstelle (PrAPI), die durch eine Frequenzbestimmungskomponente (CMF) und durch eine gesicherte Anwendungsschicht (SecApL) zugänglich ist,
wobei die Frequenzbestimmungskomponente (CMF) konfiguriert ist, um:
- die Datenübertragungs-/Datenempfangsfrequenz des NFC-Moduls (ModNFC) unter Anwendung eines Änderungsparameters (PMF) auf die Übertragungs-/Empfangs-Referenzfrequenz (FR) zu ändern (10-4, 10-5, 10-7),
- ein Signal, das von dem NFC-Modul abgegeben wird, rückzugewinnen (10-7, 10-8) und dieses Signal umzuwandeln, um decodierte Daten bei der geänderten Übertragungsfrequenz zu erhalten, und
- auf die private Anwendungsschnittstelle (PrAPI) zuzugreifen (10-9, 10-10), um die decodierten Daten an die gesicherte Anwendungsschicht (SecApL) zu übertragen.

12. Computerprogrammprodukt, das von einem Kommunikationsnetz herunterladbar ist und/oder auf einem computerlesbaren Aufzeichnungsmedium gespeichert ist und/oder von einem Mikroprozessor ausführbar ist, **dadurch gekennzeichnet, dass** es Programmcodeanweisungen für das Ausführen eines Verfahrens zum Verarbeiten von Daten nach Anspruch 1 aufweist, wenn es auf einem Prozessor ausgeführt wird.

## Claims

1. Method for processing data by an electronic data-acquisition device (DEAD, CTerm), communicating with an electronic data-providing device (DEFD, 10, SCNFC) by using a short-range wireless NFC communications technology defining a transmission/reception reference frequency (FR), electronic data-acquisition device (DEAD, CTerm) comprising:
- a public applications interface (PuAPI) accessible by an application layer (AppLyr) that uses the public application interface (PuAPI) to transmit and receive data from an NFC module (ModNFC) connected to a transmission/reception antenna (Ant); and
- a private applications interface (PrAPI) accessible by a frequency-determining component (CMF) and a secure application layer (SecApL),
the method comprising the following steps, implemented by the frequency-determining component (CMF):
- modification (10-4, 10-5, 10-7) of the data transmission/reception frequency of the NFC module (ModNFC) by applying a modification parameter (PMF) to the transmission/reception reference frequency (FR),
- retrieval (10-8) of a signal from the NFC module and transformation of this signal to obtain decoded data at the modified transmission frequency, and
- transmission (10-9, 10-10) of the decoded data to the secure application layer (SecApL) via the private application interface (PrAPI).

2. Method for processing data according to claim 1, **characterised in that** said frequency-determining component (CMF) is under the exclusive control of a trusted execution environment (TEE) of said electronic device.

3. Method for processing data according to claim 1, **characterised in that** it comprises:
- a step for receiving (10-1, 10-2, 10-3), by a frequency-determining component (CMF) of the electronic data-acquisition device (DEAD, CTerm), a request for obtaining data;
- a step for obtaining (10-4), by the frequency-determining component (CMF), the frequency-determining parameter (PMF);
- a step for modifying (10-4, 10-5), by the frequency-determining component (CMF), a frequency of an interrogation signal to the data-providing device (DEFD, 10, SCNFC) as a function of the frequency-determining parameter (PMF), delivering the interrogation frequency;
- a step for transmitting (10-7) from the NFC module (ModNFC), the interrogation signal to the electronic data-providing device (DEFD, 10, SCNFC) at said interrogation frequency.

4. Method for processing data according to claim 3, **characterised in that** the step of retrieval (10-8) of the signal from the NFC module (ModNFC) and modification of this signal to obtain decoded data at the modified transmission frequency comprises:
- a step for receiving (10-7, 10-8), from the electronic data-providing device (DEFD, 10, SCNFC), a response signal sampled at said interrogation frequency;
- a step for obtaining a sequence of bits from said response signal, as a function of said interrogation frequency;
- a step for converting said sequence of bits into a set of data;
- a step for transmitting (10-9, 10-10) said set of data.

5. Method for processing data according to claim 3, **characterised in that** said step for receiving (10-1, 10-2), by the frequency-determining component (CMF) of the electronic data-acquisition device (DEFD, 10, SCNFC), the request for obtaining data, is at least partly implemented by a private applications interface (PrAPI) and comprises a step for issuing an application authorization.

6. Method for processing data according to claim 5, **characterised in that** the step for issuing an application authorization comprises:
- a step for obtaining a piece of data representing an applications identifier of the calling application (AppP), called an applications identifier; and/or
- a step for obtaining a piece of data representing a calling applications layer (AppLyr), called an applications layer identifier;
- a step for determining an authorization for executing the determining component (CMF) as a function of said applications identifier and/or said applications layer identifier.

7. Method for processing data according to claim 1, **characterised in that** the frequency-determining parameter (PMF) is a multiplier factor.

8. Method for processing data according to claim 7, **characterised in that** said multiplier factor has a value ranging from 1.1 to 1.8.

9. Method for processing data according to claim 7, **characterised in that** the value of the multiplier factor is determined randomly, in a range of values from 1.1 to 1.8.

10. Method for processing data according to claim 7, **characterised in that** the value of the multiplier factor is determined by the frequency-determining component (CMF) at the reception (10-1, 10-2, 10-3) of a request for obtaining data by contactless transfer.

11. Electronic data-acquisition device (DEAD, CTerm) communicating with an electronic data-providing device (DEFD, 10, SCNFC) using a short-range wireless NFC communications technology defining a transmission/reception reference frequency (FR), the electronic data-acquisition device (DEAD, CTerm) comprising:
- a public application interface (PuAPI) accessible by an application layer (AppLyr) that uses the public application interface (PuAPI) to transmit and receive data from an NFC module (ModNFC) connected to a transmission/reception antenna (Ant); and
- a private applications interface (PrAPI) accessible by a frequency-determining component (CMF) and a secure application layer (SecApL)
the frequency-determining device being configured for:
- modifying (10-4, 10-5, 10-7) the data transmission/reception frequency of the NFC module (ModNFC) by applying a modification parameter (PMF) to the transmission/reception reference frequency (FR),
- retrieving (10-7, 10-8) a signal from the NFC module and transforming this signal to obtain decoded data at the modified transmission frequency, and
- accessing (10-9, 10-10) the private application interface (PrAPI) to transmit the decoded data to the secure application layer (SecApL).

12. Computer program product downloadable from a communications network and/or stored on a medium readable by a computer and/or executable by a microprocessor, **characterised in that** it comprises program code instructions for executing a method for processing data according to claim 1, when it is executed on a processor.
